# EUROPÄISCHE PATENTSCHRIFT

(11) **EP 0 515 842 B1**
(45) Veröffentlichungstag und Bekanntmachung des Hinweises auf die Patenterteilung: **14.06.1995**
(21) Anmeldenummer: 92107085.0
(22) Anmeldetag: 25.04.1992
(51) Int. Cl.: B60J 1/06

(54) **Vorrichtung zum Öffnen und Schliessen eines zweigeteilten Frontfensters für den Führerstand eines Fahrzeuges**
An apparatus for opening and closing of a bipartite front screen for the driver's cabin of a vehicle
Appareil d'ouverture et fermeture d'une vitre avant divisée en deux pour la cabine du conducteur d'un véhicule

(30) Priorität: 28.05.1991 DE 4117424
(43) Veröffentlichungstag der Anmeldung: 02.12.1992
(73) Patentinhaber: Dr.Ing.h.c. F. Porsche Aktiengesellschaft, 70435 Stuttgart (DE)
(72) Erfinder: Gerst, Karl-Heinz, W-7030 Böblingen (DE); Nekum, Bernhard, W-7141 Oberriexingen (DE)

(56) Entgegenhaltungen:
- DE-A- 3 150 786
- FR-A- 2 256 049
- GB-A- 2 206 631

## Beschreibung

Die Erfindung bezieht sich auf eine Vorrichtung zum Öffnen und Schließen eines zweigeteilten Frontfensters für den Führerstand eines Fahrzeuges nach dem Oberbegriff des Anspruchs 1.

Aus der DE-A-3 150 786 ist ein Führerstand für ein Fahrzeug bekannt, der ein zweigeteiltes Frontfenster aufweist, das vertikal versetzt zueinander angeordnete Scheiben umfasst, wobei zum Öffnen des Frontfensters die Unterscheibe hinter der Oberscheibe vertikal verfahrbar ist und beide Scheiben in Führungen unter das Dach eines Fahrerhauses verschwenkbar sind. Des weiteren ist aus der DE-A-2 712 823 ein einteiliges Frontfenster für einen Führerstand bekannt, daß unter das Dach mittels eines Lenkers und mit Unterstützung durch eine Gasfeder verfahren werden kann.

Aufgabe der Erfindung ist es, ein optimale Sichtverhältnisse ermöglichendes Frontfenster mit an die jeweiligen Arbeitsverhältnisse in einfacher Handhabungsweise anpassbaren Scheiben für ein Fahrzzeug zu schaffen, die über Führungsmittel ein den Fahrer nicht behinderndes gemeinsames Verschwenken unter das Dach gewährleisten.

Diese Aufgabe wird erfindungsgemäß durch die kennzeichnenden Merkmale des Anspruchs 1 gelöst. Weitere vorteilhafte Merkmale beinhalten die Unteransprüche.

Die mit der Erfindung erzielten Vorteile bestehen darin, daß die ersten unteren Führungsschienen der Unterscheibe eine Ausbildung aufweisen, die sowohl ein Verschieben als auch ein Verschwenken um untere Führungsrollen zur Einnahme einer Verschiebeposition und einer bündigen Schließposition gestatten. Nach der DE-A-3 150 786 ist eine solche Möglichkeit aufgrund der starren versetzten Anordnung der Unter- zur Oberscheibe nicht möglich.

Die Verschwenkbarkeit der Unterscheibe wird durch eine sich quer zur Laufbahn jeder Führungsschiene erstreckende Gleitplatte erreicht, die die obere Rolle in die vertikale Laufbahn einfädelt. Gleichzeitig wirkt die Gleitplatte mit einem Schnäpper einer Arretiervorrichtung zusammen, so daß bei bündiger Lage der beiden Scheiben die Unterscheibe in dieser Lage festgesetzt gehalten wird.

Zum gemeinsamen Verschwenken der Unterscheibe mit der Oberscheibe unter das Dach des Führerhauses sind die oberen Führungsschienen der Unterscheibe mit der Oberscheibe fest verbunden, so daß eine Schwenkeinheit gebildet wird, die sich aus der Oberscheibe, der Unterscheibe sowie den zugehörigen Führungsschienen zusammensetzt.

Damit der Fahrer durch das Verschwenken dieser Einheit unter das Dach nicht störend behindert wird bzw. seinem Kopf beim Verschwenken dieser Einheit nicht einziehen muß, sind die Laufbahnen der Führungsschienen der Oberscheibe entsprechend gewölbt ausgeführt. Diese Wölbung ist im unteren Bereich der Scheibe stärker als im oberen Bereich ausgeführt. Hierdurch wird eine Verschwenkbahn erzielt, die einen bogenförmigen Verlauf zum Kopf des Fahrers mit einem relativ großem Abstand ergibt.

Zur schwenkbaren Zwangsführung der Einheit ist des weiteren mindestens ein Lenker vorgesehen, der am oberen Rahmen der Aufbaustruktur angelenkt und jeweils mit den oberen Führungsschienen der Unterscheibe verbunden ist. Zur Unterstützung der Schwenkbewegung dient mindestens eine Gasfeder, die am seitlichen Rahmen der Aufbaustruktur abgestützt ist und am Lenker gelagert wird. Die Kraftlinie der Gasfeder verläuft bei steigendem Schwenkwinkel der Einheit derart, daß eine Kraftunterstützung beim Öffnen in die Freisichtstellung erzielt wird.

Ein Ausführungsbeispiel der Erfindung ist in der Zeichnung dargestellt und wird im folgenden näher beschrieben.

Es zeigen:
- Fig. 1 A 1 B: eine Seitenansicht der Frontscheiben mit Führungsschienen vom Inneren des Fahrerhauses aus gesehen,
- Fig. 2: einen Schnitt durch eine Unterscheibe mit Führungsschienen nach der Linie II-II der Fig. 1,
- Fig. 3: einen Schnitt durch den Bereich der oberen Führungsrolle nach der Linie III-III der Fig. 1,
- Fig. 4: einen Schnitt durch eine Oberscheibe mit Führungsschiene sowie einer Lenkeranlenkung nach der Linie IV-IV der Fig. 1,
- Fig. 5: einen Schnitt durch die Oberscheibe mit Lenker und Gasfeder nach der Linie V-V der Fig. 1,
- Fig. 6: einen Schnitt im Bereich einer oberen Rolle der Oberscheibe durch die Anlenkung der Gasfeder,

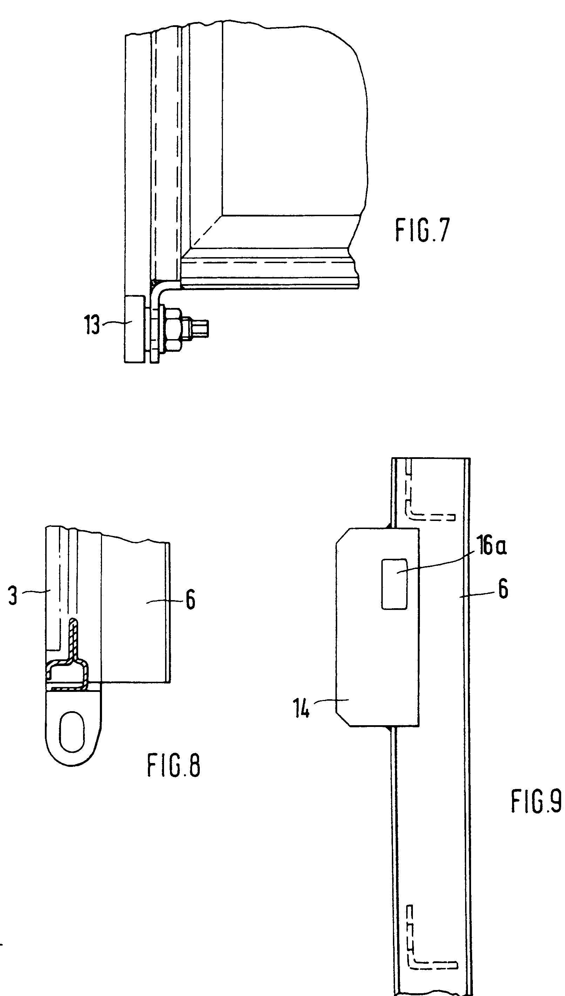

- Fig. 7: eine Sicht auf eine untere Rolle der Oberscheibe in Pfeilrichtung G der Fig. 1 B gesehen,
- Fig. 8: einen Schnitt nach der Linie VIII-VII der Fig. 7 und
- Fig. 9: eine Ansicht auf einen Abschnitt der ersten unteren Führungsschiene mit Gleitplatte.

Der Führerstand 1 eines Fahrzeugs bzw. eines Baggers weist eine aus einer Unterscheibe 2 und einer Oberscheibe 3 bestehende horizontal geteilte Frontscheibe 4 auf. Die beiden Scheiben 2 und 3 sind bündig zueinander angeordnet, d.h. sie bilden eine durchgehende Scheibenfläche ohne Stufung.

Die beiden Scheiben 2 und 3 sind jeweils zwischen seitlichen Führungsschienen 5, 6 und 7 verschiebbar angeordnet. Die Unterscheibe 2 weist hierzu erste untere Führungsschienen 6 sowie daran anschließende zweite obere Führungsschienen 7 auf, zwischen denen die Führungsschienen 5 der Oberscheibe 3 angeordnet sind.

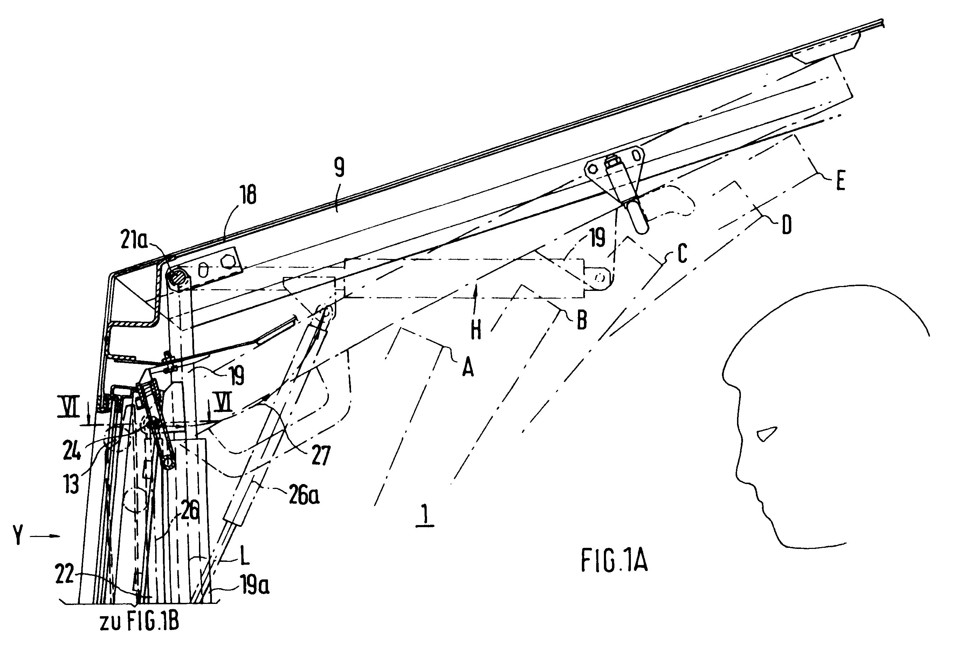

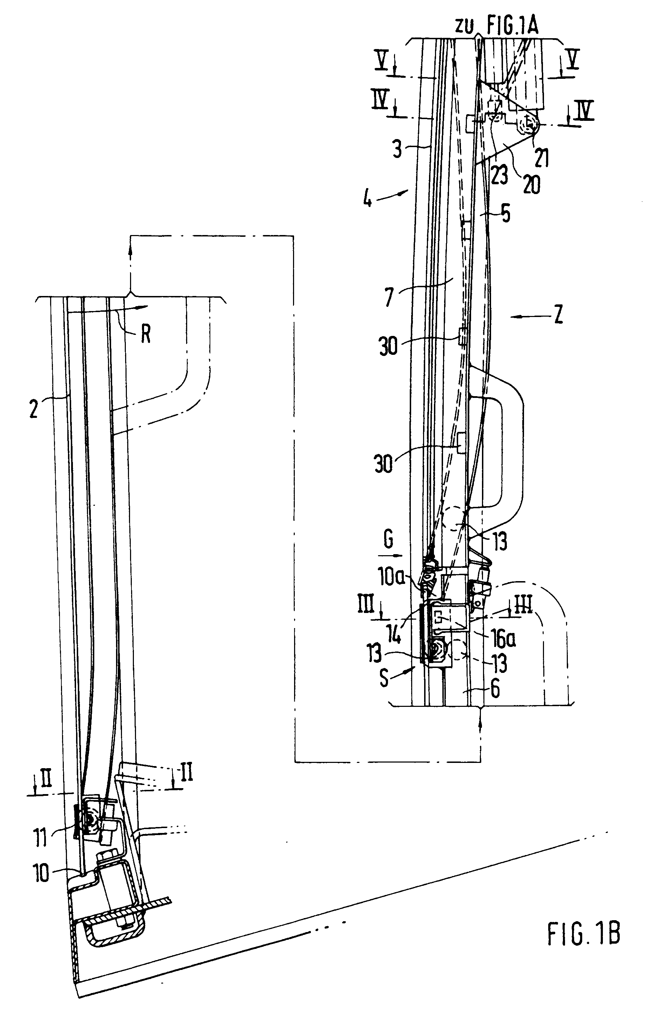

Die Scheibe 2 wird in den unteren Führungsschienen 6 über eine Arretiervorrichtung 8 in einer bündigen Schließstellung S zur Oberscheibe 3, wie Fig. 1 näher zeigt, gehalten.Nach einem Entriegeln ist die Scheibe 2 in eine zurückgeklappte Vorbereitungsstellung (was strichpunktiert angedeutet ist) zum vertikalen Öffnen verschwenkbar.

Zur Einnahme einer Freisichtstellung werden die beiden Scheiben 2 und 3 gemeinsam verschwenkt und nehmen eine hintereinanderliegende Position ein, so daß die Scheiben als eine Einheit in eine Lage unterhalb des Daches 9 des Führerhauses geschwenkt werden können und die Einheit die in Fig. 1 gezeigte Position H einnimmt.

In der geschlossenen und arretierten Stellung der Unterscheibe 2 sind die dem unteren Scheibenrand 10 zugeordneten Rollen 11 in den ersten unteren am Rahmen 15 der Aufbaustruktur befestigten Führungsschienen 6 gelagert. Die dem oberen Scheibenrand 10a zugeordneten Rollen 13 sind außerhalb der Laufbahnen der Führungsschienen 6 jeweils auf einer Gleitplatte 14 gehalten, wobei die Scheibe 2 über die Arretiervorrichtung 8 in dieser bündigen Position festgesetzt wird.

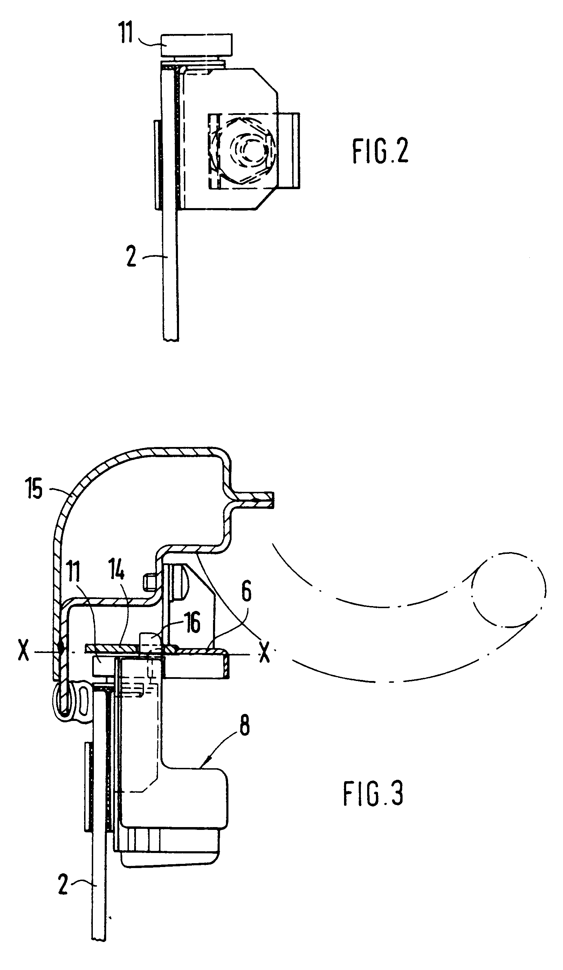

Diese Vorrichtung 8 umfasst im wesentlichen einen sogenannten Schnäpper 16 (Fig. 3) der in eine entsprechende Ausnehmung 16 a der Gleitplatte 14 einrastet. Diese ist zur Bildung einer Führung für die Rollen 11 in einer Ebene X-X mit dem Steg des U-Profiles der Führungsschienen 6 angeordnet.Sie erstreckt sich quer zur Laufbahn der Führungsschienen 6 und ist seitlich zum Hineinschwenken der oberen Rolle 13 um die untere Rolle 11 geöffnet, was strichpunktiert in Fig. 1 dargestellt ist. Diese Anordnung der Rolle 13 ermöglicht eine etwa vertikale Verschiebung der Unterscheibe 2 in Hochrichtung in die anschließenden zweiten oberen Führungsschienen 7, welche hinter der Oberscheibe 3 angeordnet und mit dieser fest verbunden sind.

Zwischen den beiden zweiten oberen Führungsschienen 7 für die Oberscheibe 3 sind weitere Führungsschienen 5 für die verschwenkbare Einheit im wesentlichen bestehend aus der Oberscheibe 3, der Unterscheibe 2 und den Führungsschienen 7 angeordnet.

Die Laufbahnen der Führungsschienen 5 sind gegenüber der Oberscheibe 3 nach innen zum Fahrer hin konvex gewölbt in der Weise, daß der untere Bereich Z stärker mit einem kleineren Radius ausgeführt ist als der anschließende obere Bereich Y. Hierdurch ist eine Zwangsführung der Einheit zum Verschwenken unter das Dach bei Erzielung eines relativ großen Freiraumes zum Kopf des Fahrers möglich, wie die Eckpunkte A, B, C, D und E der Einheit in Fig. 1 näher zeigen.

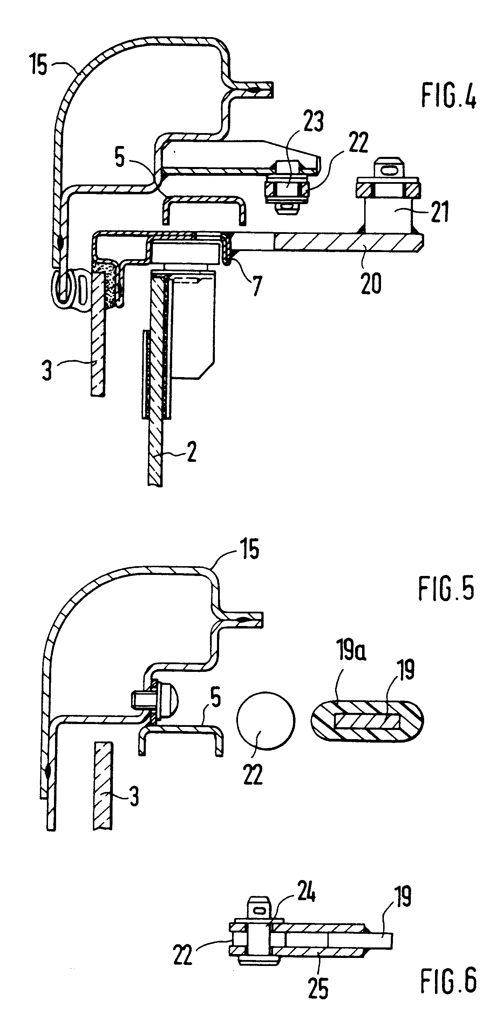

Zur Anlenkung der Einheit zum Verschwenken ist am oberen Rahmen 18 der Aufbaustruktur mindestens ein Lenker 19 in einem Lager 21a gelenkig abgestützt, der an der zweiten oberen Führungsschiene 7 schwenkbar gehalten ist. Hierzu wird an der Schiene 7 eine Blechplatte 20 befestigt, die die Lagerung 21 aufnimmt, was in Fig. 4 dargestellt ist. Über eine Ummantelung 19a ist der Lenker 19 elastisch abgedeckt.

Zum leichteren Verschwenken der Einheit unter das Dach ist zwischen der Oberscheibe 3 und dem Lenker 19 -in Seitenansicht der Fig. 1 gesehenmindestens eine Gasfeder 22 angeordnet. Dieses ist im Bereich der unteren Anlenkung 21 des Lenkers 19 an der Führungsschiene 7 am seitlichen Rahmen 15 der Aufbaustruktur im Lager 23 gelenkig abgestützt. Das obere abgekehrte Ende der Gasfeder 22 ist dagegen am Lenker 19 in einem Lager 24 in einer Platte 25 schwenkbar gehalten.

Die Gasfeder 22 weist eine Kraftlinie 26 auf, die durch die beiden Lager 23 und 24 bestimmt ist. Bei einem Verschwenken der Einheit 2, 3 und 7 unter das Dach verändert sich die Lager der Kraftlinie 26, da sich der obere Lagerpunkt 24 der Gasfeder 22 auf dem Kreisbogen 27 bewegt. Hierdurch wird nach einem relativ kleinen Schwenkwinkel der Einheit sich die Kraftlinie 26 über die Totpunktstellung (Lagerpunkt 21a) hinaus in eine Übertotpunktstellung hinaus bewegen, so daß die Kraftlinie 26a eine Kraftunterstützung bewirkt, was strichpunktiert dargestellt ist.

Die Unterscheibe 2 ist in verschiedenen Stellungen festsetzbar, wozu Rastungen 30 in der zweiten oberen Führungsschiene dienen, in die dann der Schnäpper 16 der Arrettiervorrichtung 8 einrastet. Ebenfalls ist die unter das Dach verschwenkte Einheit festsetzbar.

## Patentansprüche

1. Vorrichtung zum Öffnen und Schließen eines zweigeteilten Frontfensters für den Führerstand (1) eines Fahrzeuges, insbesondere eines Baggers, das eine Ober- und Unterscheibe (2,3) umfasst, wobei die Unterscheibe (2) über Rollen (11) zwischen Führungsschienen (5,6) in eine angehobene Öffnungsposition und in eine abgesenkte Schließstellung verfahrbar ist und beide Scheiben (2,3) gemeinsam in eine unterhalb des Führerhausdaches (9) angeordnete und verriegelbare Freisichtposition verschwenkbar sind, dadurch gekennzeichnet, daß die Unterscheibe (2) zur Oberscheibe (3) in der Schließstellung (S) bündig verlaufend an den unteren und oberen Führungsschienen (6 und 5) abgestützt gehalten ist.

2. Vorrichtung nach Anspruch 1 dadurch gekennzeichnet, daß die Unterscheibe (2) gegenüber den unteren Führungsschienen (6) um Rollen (11) an einer Scheibenunterkante (10) verschwenkbar ist.

3. Vorrichtung nach den Ansprüchen 1 oder 2 dadurch gekennzeichnet, daß die Führungsschienen (6) im Querschnitt U-profilförmig ausgeführt sind und jede Schiene im Bereich von einer Scheibenoberkante (10a) zugeordneten Rollen (13) eine quer zur Laufbahn der Führungsschiene (6) erstreckende Gleitplatte (14) aufweist, die in einer Stegebene (X-X) der Führungsschiene (6) verläuft.

4. Vorrichtung nach Anspruch 3, dadurch gekennzeichnet, daß die Gleitplatte (14) eine mit einem Schnäpper (16) einer Arretiervorrichtung (8) korrespondierende Ausnehmung (16a) aufweist und die Scheibe (2) über den Schnäpper (16) in der Schließstellung (S) gehalten ist.

5. Vorrichtung nach Anspruch 1, dadurch gekennzeichnet, daß anschließend zu den unteren Führungsschienen (6) weitere obere Führungsschienen (7) im Bereich der Oberscheibe (3) angeordnet und mit dieser fest verbunden sind.

6. Vorrichtung nach den Ansprüchen 1 und 5, dadurch gekennzeichnet, daß zwischen den oberen Führungsschienen (7) für die Unterscheibe (2) die weiteren Führungsschienen (5) für die Oberscheibe (3) vorgesehen sind, die eine Schwenkeinheit mit der Unterscheibe (2) sowie den zugehörigen oberen Führungsschienen (7) bilden.

7. Vorrichtung nach den Ansprüchen 5 und 6, dadurch gekennzeichnet, daß die weiteren Führungsschienen (5) der oberen Schwenkeinheit (2, 3 und 7) gegenüber der Oberscheibe (3) konkav gewölbte Laufbahnen für die Rollen (30, 31) aufweisen.

8. Vorrichtung nach Anspruch 7, dadurch gekennzeichnet, daß die Wölbungen der Laufbahnen in den Führungsschienen (5) im unteren Bereich (Z) stärker und mit einem kleineren Radius als im oberen Bereich (Y) der Oberscheibe (3) mit einem größeren Radius ausgebildet sind.

9. Vorrichtung nach Anspruch 1, dadurch gekennzeichnet, daß mindestens ein Lenker (19) für die Schwenkeinheit (2, 3, 7) am oberen Rahmen (18) der Aufbaustruktur in einem Lager (21a) abgestützt ist und mit der oberen Führungschiene (7) der Unterscheibe (2) über ein weiteres Lager (21) schwenkbar verbunden wird.

10. Vorrichtung nach Anspruch 1, dadurch gekennzeichnet, daß zwischen der Oberscheibe (3) und dem Lenker (19) mindestens eine Gasfeder (22) angeordnet ist, die im Bereich der unteren Anlenkung (Lager 21) des Lenkers (19) am seitlichen Rahmen (15) der Aufbaustruktur in einem Lager (23) abgestützt ist und mit ihrem abgekehrten Ende am Lenker (19) in einem weiteren Lager (24) schwenkbar gehalten wird.

11. Vorrichtung nach Anspruch 10, dadurch gekennzeichnet, daß die Gasfeder (22) in bündiger Schließstellung (5) der beiden Scheiben (2 u. 3) eine etwa parallel zur Lenkerachse (L) verlaufende Kraftlinie (26) aufweist, die sich bei zunehmendem Schwenkwinkel der Einheit (2, 3 u. 7) von einer vor dem Totpunkt liegenden Stellung (Lager 21 a) bis zu einer kraftunterstützenden Übertotpunktlage (Kraftlinie 26 a) kontinuierlich verändert.

## Claims

1. A device for opening and closing a front window divided into two for the driver's compartment (1) of a vehicle, in particular an excavator, comprising an upper and a lower pane (2, 3), wherein the lower pane (2) is movable over rollers (11) between guide rails (5, 6) into a raised open position and into a lowered closed position and the two panes (2, 3) are pivotable into a clear-view position situated and lockable below the roof (9) of the driver's cab, **characterized in that** the lower pane (2) is held supported on the lower and upper guide rails (6 and 5) so as to extend flush with the upper pane (3) in the closed position (**S**).

2. A device according to Claim 1, **characterized in that** the lower pane (2) is pivotable about rollers (11) on a lower edge (10) of the pane with respect to the lower guide rails (6).

3. A device according to Claim 1 or 2, **characterized in that** the guide rails (6) are U-shaped in cross-section and each rail in the region of rollers (13) associated with an upper edge (10a) of the rail has a sliding plate (14) extending transversely to the track of the guide rail (6) and extending in a web plane (**X-X**) of the guide rail (6).

4. A device according to Claim 3, **characterized in that** the sliding plate (14) comprises a recess (16a) corresponding to a snap catch (16) of a locking device (8) and the pane (2) is held in the closed position (**S**) by way of the snap catch (16).

5. A device according to Claim 1, **characterized in that** adjoining the lower guide rails (6) further upper guide rails (7) are arranged in the region of the upper pane (3) and are securely connected thereto.

6. A device according to Claims 1 and 5, **characterized in that** the further guide rails (5) for the upper pane (3) are provided between the upper guide rails (7) for the lower pane (2), and form a pivoting unit with the lower pane (2) as well as the associated upper guide rails (7).

7. A device according to Claims 5 and 6, **characterized in that** the further guide rails (5) of the upper pivoting unit (2, 3 and 7) have tracks, bulging in a concave manner with respect to the upper pane (3), for the rollers (30, 31).

8. A device according to Claim 7, **characterized in that** the bulges of the tracks in the guide rails (5) in the lower region (**Z**) are more pronounced and have a smaller radius than in the upper region (**Y**) of the upper pane (3) with a larger radius.

9. A device according to Claim 1, **characterized in that** at least one support arm (19) for the pivoting unit (2, 3, 7) is supported in a bearing (21a) on the upper frame (18) of the body structure and is pivotably connected to the upper guide rail (7) of the lower pane (2) by way of a further bearing (21).

10. A device according to Claim 1, **characterized in that** at least one gas spring (22) is arranged between the upper pane (3) and the support arm (19), and is supported in a bearing (23) in the region of the lower articulation (bearing 21) of the support arm (19) on the lateral frame (15) of the body structure and is held with the remote end thereof on the support arm (19) so as to be pivotable in a further bearing (24).

11. A device according to Claim 10, **characterized in that** in the flush closed position (**S**) of the two panes (2 and 3) the gas spring (22) has a line of force (26) extending substantially parallel to the support-arm axis (**L**) and changing continuously as the pivot angle of the unit (2, 3 and 7) increases from a position (bearing 21a) situated in front of the dead centre to a top-dead-centre position (line of force 26a) assisting the force.

## Revendications

1. Dispositif d'ouverture et de fermeture d'une vitre avant en deux parties pour la cabine (1) d'un véhicule, en particulier d'un excavateur, qui comporte une vitre supérieure et une vitre inférieure (2, 3), la vitre inférieure (2) pouvant être déplacée par des galets (11) entre des rails de guidage (5, 6) dans une position d'ouverture relevée et dans une position de fermeture abaissée et les deux vitres (2, 3) pouvant pivoter conjointement dans une position de bonne visibilité, verrouillable, située au-dessous du toit (9) de la cabine, caractérisé en ce que la vitre inférieure (2) est soutenue par rapport à la vitre supérieure (3) en position de fermeture (S), alignée avec celle-ci, sur les rails de guidage inférieurs et supérieurs (6 et 5).

2. Dispositif selon la revendication 1, caractérisé en ce que la vitre inférieure (2) peut pivoter par rapport aux rails de guidage (6) inférieurs autour de galets (11), sur un bord inférieur (10) de la vitre.

3. Dispositif selon les revendications 1 ou 2, caractérisé en ce que les rail s de guidage (6) ont une section transversale profilée en U et chaque rail présente, dans la région de galets (13) associés à un bord supérieur (10a) de la vitre, une plaque de glissement (14) s'étendant transversalement à la voie de roulement du rail de guidage (6), laquelle plaque s'étend dans un plan (X-X) de l'âme du rail de guidage (6).

4. Dispositif selon la revendication 3, caractérisé en ce que la plaque de glissement (14) présente un évidement (16a) correspondant à un cliquet (16) d'un dispositif d'arrêt (8) et la vitre (2) est maintenue en position de fermeture (S), par le cliquet (16).

5. Dispositif selon la revendication 1, caractérisé en ce qu'à la suite des rails de guidage inférieurs (6) sont prévus d'autres rails de guidage (7) supérieurs dans la région de la vitre supérieure (3), qui sont reliés fermement à celle-ci.

6. Dispositif selon les revendications 1 et 5, caractérisé en ce qu'entre les rails de guidage supérieurs (7) de la vitre inférieure (2) sont prévus les autres rails de guidage (5) de la vitre supérieure (3), qui forment une unité pivotante avec la vitre inférieure (2) ainsi qu'avec les rails de guidage (7) supérieurs correspondants.

7. Dispositif selon les revendications 5 et 6, caractérisé en ce que les autres rails de guidage (5) de l'unité pivotante supérieure (2, 3 et 7) présentent des voies de roulement, concaves par rapport à la vitre supérieure (3), pour les galets (30, 31).

8. Dispositif selon la revendication 7, caractérisé en ce que les courbures des voies de roulement dans les rails de guidage (5) sont plus marquées dans la zone inférieure (Z) et présentent un plus petit rayon que dans la zone supérieure (Y) de la vitre supérieure (3), avec un plus grand rayon.

9. Dispositif selon la revendication 1, caractérisé en ce qu'au moins un bras oscillant (19) pour l'unité pivotante (2, 3, 7) prend appui sur le cadre supérieur (18) de la structure de la carrosserie, dans un palier (21a) et est relié au rail de guidage (7) supérieur de la vitre inférieure (2), par un autre palier (21), de manière à pouvoir pivoter.

10. Dispositif selon la revendication 1, caractérisé en ce qu'entre la vitre supérieure (3) et le bras oscillant (19) il est prévu au moins un ressort à gaz (22) qui dans la région de l'articulation inférieure (palier 21) du bras oscillant (19) prend appui sur le cadre latéral (15) de la structure de la carrosserie, dans un palier (23) et qui avec son extrémité opposée est maintenu pivotant sur le bras oscillant (19), dans un autre palier (24).

11. Dispositif selon la revendication 10, caractérisé en ce que le ressort à gaz (22) présente, en position de fermeture (6) alignée des deux vitres (2 et 3), une ligne de force (26) s'étendant à peu près parallèlement à l'axe (L) du bras oscillant, laquelle varie en continu lorsque l'angle de pivotement de l'unité (2, 3 et 7) augmente, depuis une position (palier 21a) située devant le point mort jusqu'à une position située audelà du point mort (ligne de force (26a)) soutenant les forces.
